# EUROPÄISCHE PATENTSCHRIFT

(11) **EP 1 543 887 B1**
(45) Veröffentlichungstag und Bekanntmachung des Hinweises auf die Patenterteilung: **07.06.2006**
(21) Anmeldenummer: 04029012.4
(22) Anmeldetag: 08.12.2004
(51) Int. Cl.: B05C 17/00, B65D 81/32

(54) **Mehrkomponentenkartusche und ihre Anwendung**
Multi- component cartridge and its use
Cartouche à plusieurs composants et son utilisation

(30) Priorität: 19.12.2003 DE 10360627
(43) Veröffentlichungstag der Anmeldung: 22.06.2005
(73) Patentinhaber: Heraeus Kulzer GmbH, 63450 Hanau (DE)
(72) Erfinder: Nehren, Klaus-Dieter, 41539 Dormagen (DE); Schaub, Matthias, Dr., 40593 Düsseldorf (DE); Bressler, Christian, 60385 Frankfurt (DE); Pollock, Benedikt, 41812 Erkelenz (DE)
(74) Vertreter: Kühn, Hans-Christian

(56) Entgegenhaltungen:
- EP-A- 0 232 733
- DE-A1- 10 022 160
- PATENT ABSTRACTS OF JAPAN Bd. 2000, Nr. 02, 29. Februar 2000 (2000-02-29) & JP 11 310278 A (MEIWA PACKS:KK), 9. November 1999 (1999-11-09)
- PATENT ABSTRACTS OF JAPAN Bd. 1998, Nr. 01, 30. Januar 1998 (1998-01-30) & JP 09 255050 A (KEIHAN SEROFUAN KK), 30. September 1997 (1997-09-30)

## Beschreibung

Die Erfindung betrifft Mehrkomponentenkartuschen, besonders Zweikammer-Kartuschen, zur Abgabe viskoser Pasten.

Im Dentalmarkt sind motorgetriebene Geräte zum Austragen und Anmischen von zweikomponentigen Pasten verbreitet. Darin werden entweder Doppelkartuschen oder Schlauchbeutel mit Stützkartuschen verwendet. Die Produkte, die aus diesen Kartuschen ausgetragen werden sind in der Regel hochviskose Pasten. Deshalb benötigen sie einen hohen Druck, um durch den vorgeschalteten Mischer fließen zu können. Entsprechend hohe Kraft wird von den Geräten aufgebracht.

Da es sich um chemisch härtende Substanzen in diesen Kartuschen/Schlauchbeuteln handelt, ist die Möglichkeit vorhanden, dass sich die Auslasskanäle durch Pfropfenbildung verschließen. Geschieht das nur bei einer der beiden Komponenten, so baut sich der gesamte Förderdruck ausschließlich in dieser verstopften Kammer auf.

Bei den bekannten Geräten kann sich dabei ein Druck von ca. 90 bar und mehr aufbauen.

Aufgrund der geometrischen Gegebenheiten der Geräte sind die maximalen Wandstärken der Kartuschenkammern begrenzt. Der Einsatz einer Kartusche, die mehr als 90 bar Druck standhält stellt jedoch keine garantierte Sicherheit dar, weil die meisten Geräte nicht über eine Kraftbegrenzung verfügen.

Es ist schwierig, ein Kunststoffmaterial zu finden, das zu den Inhaltsprodukten kompatibel ist und gleichzeitig diesen hohen mechanischen Ansprüchen standhält. Getestete Kunststoffe, die kompatibel mit den vorgesehenen Pasten sind, halten maximal einem Druck von ca. 60 bar stand. Beim Bersten der Kartuschen spritzt der Inhalt u.U. mehrere Meter weit.

Da es z.Z. nicht möglich erscheint, das Bersten in jedem Fall zu vermeiden, und die Geräte weitverbreitet sind, ist es wünschenswert, das Spritzen zu verhindern und dem Anwender zu signalisieren, dass der Fördervorgang nicht korrekt stattfindet.

Es stellt sich daher die Aufgabe, die mit einem Platzen von Mehrkomponentenkartuschen verbundenen Auswirkungen (unkontrolliertes Verspritzen des Kartuscheninhalts) zu vermeiden.

Die Lösung der Aufgabe erfolgt gemäß Anspruch 1. Weitere vorteilhafte Ausführungen sind in den folgenden Ansprüchen beschrieben.

Es sind Kartuschen auf dem Markt, die aus anderen konstruktiven Gründen Wandstärkenverjüngungen aufweisen und bevorzugt an diesen Stellen platzen.

Diese Verjüngungen sind aber an solchen Stellen vorhanden, dass sie dem Anwender keine Sicherheit geben. Sie besitzen keine separaten Hohlräume oder Trennwände.

Die Erfindung betrifft somit Zweikammer-Kartuschen zur Abgabe viskoser Pasten, bei denen mindestens eine der Kammern eine Sollbruchstelle aufweist, die nicht auf der gegebenenfalls den Kammern gemeinsamen Fläche liegt. Die Sollbruchstelle(n) mündet/münden zweckmäßig in einen Hohlraum außerhalb der Kammern. Bevorzugt sind Kartuschen ohne gemeinsame Trennwand zwischen den Kammern.

Ein Spritzschutz im Sinne der vorliegenden Erfindung verhindert im Falle des Berstens das Spritzen, d.h., dass bei einem Platzen einer Mehrkomponentenkartusche unkontrolliertes Verspritzen vermieden wird.

Derartige Kartuschen sind z.B. in DE 100 22 160 A1 beschrieben und abgebildet.

Anhand der Zeichnungen wird die Erfindung näher erläutert:
- Fig. 1: zeigt einen Querschnitt durch ein Zweikammer-Kartuschensystem des Standes der Technik mit gemeinsamer Trennwand.
- Fig. 2: zeigt einen Querschnitt durch ein Zweikammer-Kartuschensystem, bei dem die Kartuschen durch einen Steg verbunden sind, und die Sollbruchstelle 12 als Verjüngung der Wand ausgeführt ist.
- Fig. 3: zeigt einen Querschnitt durch ein Zweikammer-Kartuschensystem, bei dem die Kartuschen durch einen Steg verbunden sind, und die Sollbruchstelle 13 als Kerbe ausgeführt ist.

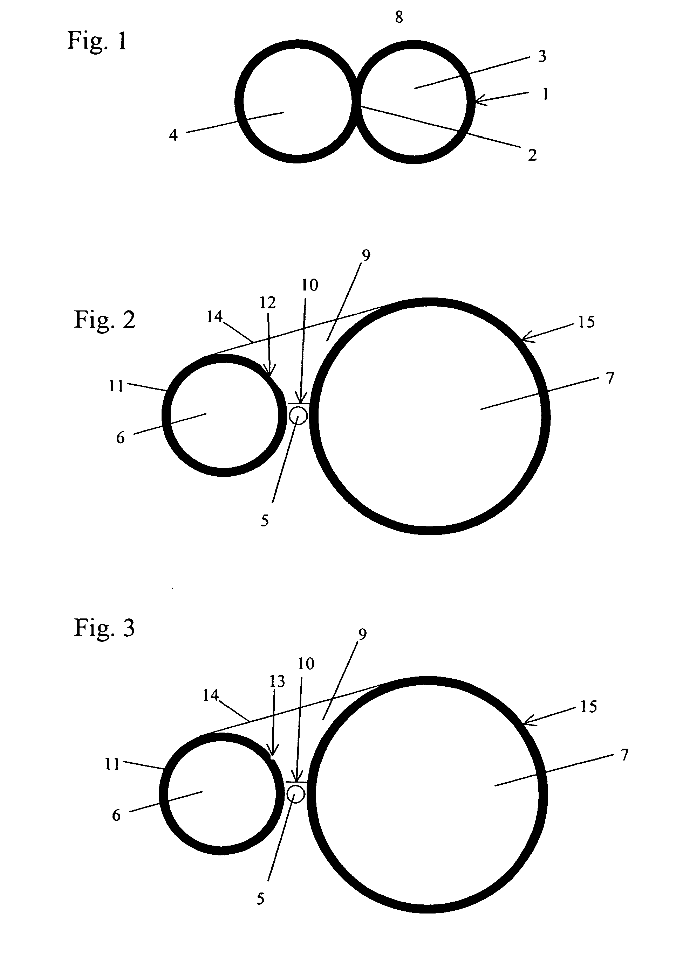

Bei Doppelkartuschen 1 mit gemeinsamer Trennwand 2 kann die Sollbruchstelle so gestaltet werden, dass sich ein einseitiger Überdruck in z.B. Kammer 3 durch Reißen der Trennwand 2 in die andere Kammer 4 entspannen kann (Fig. 1). Das ist bei der vorliegenden Erfindung nicht vorgesehen. Die Sollbruchstelle liegt nicht auf der den Kammern gemeinsamen Fläche.

In einer besonderen Ausführungsform (Fig. 2) verläuft die Mischwelle 5 zum Antreiben des dynamischen Mischers zwischen den beiden Kartuschenkammern 6, 7. Eine Sollbruchstelle kann z.B. an der Stelle 12 vorgesehen sein. Material kann in einen beliebig gestalteten Hohlraum entweichen (Raum 9), der in Fig. 2 durch die Fläche 14 geschlossen ist.

Bei vielen Ausdruck-Geräten ist die Kartusche bei der Anwendung von allen Seiten frei. Daher wird das im vorliegenden beschriebene "Überdruckventil" so gestaltet, dass sich herausspritzendes Material in dem Hohlraum 9 sammelt.

Dieser Hohlraum 9 wird in den in Figuren 2 und 3 dargestellten Ausführungsform geschaffen, indem oberhalb der zwischen den Kammern 6, 7 verlaufenden Mischwelle ein Steg 10 (vorzugsweise aus Kunststoff) angebracht wird. Darüber wird außen an der Kammerwand 11 eine längs verlaufende Verjüngung 12,13 als Sollbruchstelle angebracht. Diese kann z.B. als Radiusabflachung 12 oder als Kerbe 13 gestaltet sein.

Indem die Außendurchmesser der beiden Kartuschenkammern 6, 7 tangential 14 mittels einer Fläche (z.B. einem Etikett, einer Folie oder einer weiteren Wand) verbunden werden, entsteht ein Hohlraum 9 über der Sollbruchstelle 12, 13 .

Der zwischen den Kammern 6, 7 verlaufende Steg 10 kann:
mit beiden Wänden 11, 15 der Kammern 6, 7 verbunden sein,
nur mit einer der beiden Wände 11, 15 der Kammern 6, 7 verbunden sein,
nur mit der Wand 15 der größeren Kammer 7 verbunden sein oder
ein separates Einsatzteil sein, das keine feste Verbindung zu den Wänden 11, 15 der Kammern hat.

Da die Kartusche in einer weiteren bevorzugten Ausführungsform für ein Mischungsverhältnis von 5:1 ausgelegt ist, ist der Druck in den einzelnen Kammern bei gleicher Kraft auf die Kolben unterschiedlich groß.

Deshalb genügt es, die Sollbruchstelle bei diesem Verhältnis nur bei der kleineren Kammer vorzusehen. Aber auch in einem solchen Fall kann es vorteilhaft sein, an beiden Kammern je eine Sollbruchstelle vorzusehen, um beide Kammern zu schützen.

Da es sich im Vorliegenden um Doppelkartuschen handelt, bei denen die beiden Kammern rohrförmig mit geringem Abstand zueinander angeordnet sind, kann mit dieser Erfindung ein Hohlraum geschaffen werden, der nach dem Bersten das herausspritzende Material auffängt. Dieses Prinzip kann auf alle Doppelkartuschen angewandt werden, die von Hand, Druckluft oder Motor entleert werden.

## Patentansprüche

1. Zweikammer-Kartusche zur Abgabe viskoser Pasten, **dadurch gekennzeichnet, dass** die Kartusche einen Spritzschutz aufweist, wobei mindestens eine der Kammern (6, 7) eine Sollbruchstelle (12, 13) aufweist.

2. Zweikammer-Kartusche nach Anspruch 1, **dadurch gekennzeichnet, dass** die Sollbruchstelle (12, 13) nicht auf der den Kammern gemeinsamen Fläche liegt.

3. Zweikammer-Kartusche nach Anspruch 1 oder 2, **dadurch gekennzeichnet, dass** die Sollbruchstelle(n) in einen Hohlraum (9) außerhalb der Kammern mündet/münden.

4. Zweikammer-Kartusche nach einem der Ansprüche 1 oder 3 ohne gemeinsame Trennwand zwischen den Kammern.

5. Zweikammer-Kartusche nach Anspruch 3 oder 4, **dadurch gekennzeichnet, dass** der Hohlraum (9) durch
A einen zwischen den Kammern verlaufenden Steg (10),
B die Kammerwände (11, 15) und
C eine Fläche (14)
gebildet wird.

6. Zweikammer-Kartusche nach Anspruch 5, **dadurch gekennzeichnet, dass** die Fläche (14) durch eine Kunststoffwand, eine Folie oder ein Etikett gebildet wird.

7. Zweikammer-Kartusche nach einem der Ansprüche 1 bis 6, **dadurch gekennzeichnet, dass** die Sollbruchstelle(n) als Kerbe (13) oder Wandverjüngung (12) ausgeführt ist/sind.

8. Zweikammer-Kartusche nach einem der Ansprüche 1 bis 7, **dadurch gekennzeichnet, dass** die Kammern (6,7) je eine Sollbruchstelle aufweisen.

9. Zweikammer-Kartusche nach einem der Ansprüche 5 bis 8, **dadurch gekennzeichnet, dass** der zwischen den Kammern (6, 7) verlaufende Steg (10) mit beiden Wänden (11, 15) der Kammern (6, 7) verbunden ist.

10. Zweikammer-Kartusche nach einem der Ansprüche 5 bis 9, **dadurch gekennzeichnet, dass** der zwischen den Kammern (6, 7) verlaufende Steg (10) nur mit einer der beiden Wände (11, 15) der Kammern (6, 7) verbunden ist.

11. Zweikammer-Kartusche nach Anspruch 10, **dadurch gekennzeichnet, dass** der zwischen den Kammern (6, 7) verlaufende Steg (10) nur mit der Wand (15) der größeren Kammer (7) verbunden ist.

12. Zweikammer-Kartusche nach den Ansprüchen 5 bis 11, **dadurch gekennzeichnet, dass** der zwischen den Kammern (6, 7) verlaufende Steg (10) ein separates Einsatzteil ist, das keine feste Verbindung zu den Wänden (11, 15) der Kammern hat.

## Claims

1. Two-chamber cartridge for dispensing viscous pastes, **characterized in that** the cartridge is designed so as to prevent splattering, at least one of the chambers (6, 7) having a predetermined breaking point (12, 13).

2. Two-chamber cartridge according to Claim 1, **characterized in that** the predetermined breaking point (12, 13) does not lie on the surface common to the chambers.

3. Two-chamber cartridge according to Claim 1 or Claim 2, **characterized in that** the predetermined breaking point debouches, or the predetermined breaking points debouch, into a void (9) outside the chambers.

4. Two-chamber cartridge according to either of Claims 1 or 3 without a common dividing wall between the chambers.

5. Two-chamber cartridge according to Claim 3 or Claim 4, **characterized in that** the void (9) is bounded by
A a web (10) extending between the chambers,
B the chamber walls (11, 15), and
C a surface (14).

6. Two-chamber cartridge according to Claim 5, **characterized in that** the surface (14) is formed by a wall of plastic material, a foil or a label.

7. Two-chamber cartridge according to any one of Claims 1 to 6, **characterized in that** the predetermined breaking point(s) is or are formed by notching (13) or thinning (12).

8. Two-chamber cartridge according to any one of Claims 1 to 7, **characterized in that** the chambers (6, 7) each have a predetermined breaking point.

9. Two-chamber cartridge according to any one of Claims 5 to 8, **characterized in that** the web (10) extending between the chambers (6, 7) is joined to both walls (11, 15) of the chambers (6, 7).

10. Two-chamber cartridge according to any one of Claims 5 to 9, **characterized in that** the web (10) extending between the chambers (6, 7) is only joined to one of the two walls (11, 15) of the chambers (6, 7).

11. Two-chamber cartridge according to Claim 10, **characterized in that** the web (10) extending between the chambers (6, 7) is only joined to the wall (15) of the larger chamber (7).

12. Two-chamber cartridge according to Claims 5 to 11, **characterized in that** the web (10) extending between the chambers (6, 7) is a separate inserted part with no fixed connection to the walls (11, 15) of the chambers.

## Revendications

1. Cartouche à deux compartiments pour la distribution de pâtes visqueuses, **caractérisée en ce que** la cartouche comporte une protection anti-éclaboussure, au moins un des compartiments (6, 7) comportant une zone destinée à la rupture (12, 13).

2. Cartouche à deux compartiments selon la revendication 1, **caractérisée en ce que** la zone destinée à la rupture (12, 13) ne se situe pas sur la surface commune aux deux compartiments.

3. Cartouche à deux compartiments selon la revendication 1 ou 2, **caractérisée en ce que** la/les zone(s) destinée(s) à la rupture débouche(nt) dans une cavité (9) en dehors des compartiments.

4. Cartouche à deux compartiments selon la revendication 1 ou 3 sans paroi de séparation commune entre les compartiments.

5. Cartouche à deux compartiments selon la revendication 3 ou 4, **caractérisée en ce que** la cavité (9) est formée :
A) par une ailette (10) qui s'étend entre les compartiments,
B) par les parois (11, 15) des compartiments, et
C) par une surface (14).

6. Cartouche à deux compartiments selon la revendication 5, **caractérisée en ce que** la surface (14) est formée par une paroi en matière plastique, un film ou une étiquette.

7. Cartouche à deux compartiments selon l'une quelconque des revendications 1 à 6, **caractérisée en ce que** la/les zone(s) destinée(s) à la rupture est/sont réalisées sous forme d'encoche (13) ou de rétrécissement de la paroi (12).

8. Cartouche à deux compartiments selon l'une quelconque des revendications 1 à 7, **caractérisée en ce que** les compartiments (6, 7) comportent chacun une zone destinée à la rupture.

9. Cartouche à deux compartiments selon l'une quelconque des revendications 5 à 8, **caractérisée en ce que** l'ailette (10), qui s'étend entre les compartiments (6, 7), est reliée aux deux parois (11, 15) des compartiments (6, 7).

10. Cartouche à deux compartiments selon l'une quelconque des revendications 5 à 9, **caractérisée en ce que** l'ailette (10), qui s'étend entre les compartiments (6, 7), est reliée seulement à une des deux parois (11, 15) des compartiments (6, 7).

11. Cartouche à deux compartiments selon la revendication 10, **caractérisée en ce que** l'ailette (10), qui s'étend entre les compartiments (6, 7), est reliée seulement à la paroi (15) du plus grand compartiment (7).

12. Cartouche à deux compartiments selon l'une quelconque des revendications 5 à 11, **caractérisée en ce que** l'ailette (10), qui s'étend entre les compartiments (6, 7), est un élément séparé qui n'est pas relié fermement aux parois (11, 15) des compartiments.
